# EUROPÄISCHE PATENTSCHRIFT

(11) **EP 0 952 060 B1**
(45) Veröffentlichungstag und Bekanntmachung des Hinweises auf die Patenterteilung: **04.08.2004**
(21) Anmeldenummer: 99105974.2
(22) Anmeldetag: 25.03.1999
(51) Int. Cl.: B60T 13/66, B60T 13/74, B60T 8/00

(54) **Verfahren und Vorrichtung zum Einstellen bzw. Ändern des Lüftspiels zwischen Bremsbelägen und Reibflächen von Fahrzeugbremsen**
Method and device for adjusting or modifying the clearance between the brake linings and the friction surfaces of vehicle brakes
Procédé et dispositif pour ajuster ou modifier le jeu entres les garnitures de frein et les surfaces de frottement des freins de véhicules

(30) Priorität: 28.03.1998 DE 19813912
(43) Veröffentlichungstag der Anmeldung: 27.10.1999
(73) Patentinhaber: Continental Teves AG & Co. oHG, 60441 Frankfurt am Main (DE)
(72) Erfinder: Dieckmann, Thomas, Dr., 30982 Pattensen (DE); Maron, Christof, Dr., 93128 Regenstanf (DE)

(56) Entgegenhaltungen:
- EP-A- 0 909 687
- DE-A- 4 433 377
- DE-A- 19 607 048
- DE-A- 19 631 862

## Beschreibung

Die gegenständliche Erfindung betrifft ein Verfahren zum Einstellen bzw. Ändern des Lüftspiels zwischen Bremsbelägen und Reibflächen von Fahrzeugbremsen mittels steuer- und regelbaren Abhebe- und Rückholvorgängen für die Bremsbeläge, gemäß dem Oberbegriff des Anspruchs 1.

Die gegenständliche Erfindung betrifft ferner auch eine Vorrichtung zum Einstellen bzw. Ändern des Lüftspiels zwischen Bremsbelägen und Reibflächen von Fahrzeugbremsen mit einer Bremssteuerung/Bremsregelung zum Erfassen und Verarbeiten der von einem Bremspedalsensor sowie gegebenenfalls der von anderen Sensoren stammenden elektrischen Signale und zum Aktivieren von elektromechanisch arbeitenden Bremsaktuatoren, gemäß dem Oberbegriff des Anspruchs 6.

In den letzten Jahren sind für Kraftfahrzeuge, insbesondere für Personenkraftwagen, elektromechanische Bremsanlagen, sogenannte Bremsanlagen vom Brake-By-Wire-Typ, vorgeschlagen und immer wieder weiter entwickelt worden. Bei derartigen Bremsanlagen wird die Einwirkung der Fußkraft des Fahrers auf das Bremspedal von einem Sensor erfaßt, in ein elektrisches Signal umgewandelt und an Bremsaktuatoren weitergeleitet. Jedem Rad des Kraftfahrzeuges ist ein derartiger Bremsaktuator zugeordnet, welcher im allgemeinen mittels einer durch einen Elektromotor betriebenen Vorrichtung eine Spannkraft auf die Bremsbeläge ausübt, so daß diese an die Bremsscheibe der Radbremse gepreßt werden. Eine Ausführungsvariante einer derartigen elektromechanischen Fahrzeugscheibenbremsanlage ist beispielsweise aus der DE 40 21 572 A1 bekannt.

Ein Verfahren und eine Vorrichtung der eingangs genannten Art, mit dem bzw. der ein elektronisch gesteuertes Einstellen des Lüftspiels zwischen Bremsbelägen und Reibflächen von Fahrzeugbremsen möglich ist, ist aus der DE 44 33 377 A1 bekannt. Verfahren und Vorrichtung arbeiten demnach unter Einsatz einer Bremssteuerung/Bremsregelung, mit der, außerhalb von Bremsbetätigungsphasen, ein definierter Lüftspalt zwischen den Bremsbelägen und den jeweiligen Reibflächen einstellbar ist. Hier geht es insbesondere darum, den Abhebe- und Rückholvorgang derart zu optimieren, daß der Abhebevorgang nur so weit wie nötig erfolgt, um einerseits völlige Freigabe der Bremsen und damit Freilauf der Räder zu gewährleisten, und um anderseits im Bedarfsfall ein schnelles Zugreifen der Bremsen sicherzustellen. Das aktive Abheben der Bremsbeläge von den jeweiligen Reibflächen verringert das Restreibmoment und damit auch den Verschleiß der Bremsbeläge. Darüber hinaus wird auf diese Weise auch der Treibstoffverbrauch des Fahrzeuges reduziert. Das Abheben der Bremsbeläge von den jeweiligen Reibflächen wird mittels eines in Umkehrrichtung elektrisch betriebenen Stellmotors durchgeführt, welcher im Normalbetrieb auch zum Aktivieren der Bremse dienen kann. Die Funktionsweise der Bremsregelung/Bremssteuerung kann dabei mitumfassen, daß das Lüftspiel regelmäßig, etwa nach jedem Motorstart, um einen kleinen Betrag vor- und rückgestellt wird, um die mechanisch zu bewegenden Komponenten der Bremsen leicht gangbar zu halten. Darüber hinaus kann vorgesehen werden, daß die Bremsen bei Nässe regelmäßig und kurzzeitig sowie für den Fahrer unmerklich und geringfügig betätigt werden, um den Flüssigkeitsfilm abzustreifen.

Nach diesem bekannten Verfahren bzw. mit dieser bekannten Vorrichtung soll vorrangig die Grundfunktion einer aktiv durchgeführten, völligen Freigabe der Bremse sichergestellt sein. Es wird daher ein Lüftspiel einer Größe eingestellt, welches bei einem Betätigen der Bremse erst überwunden werden muß bis sich eine Bremskraft einstellt. Dieses Überwinden des Lüftspiels kostet Zeit und vergrößert somit die Bremszeit und den Bremsweg.

DE-A- 196 07 048 offenbart ein Verfahren wobei die Größe des Lüftspiels in Abhängigkeit von einer Betätigung des Gaspedals geändert und eingestellt wird, wobei bei einer Reduktion oder einem Aufhören des Gaspedaldruckes das Lüftspiel reduziert wird.

Die Aufgabe der vorliegenden Erfindung besteht daher darin, das bekannte Verfahren bzw. die bekannte Vorrichtung so weiter zu entwickeln, daß dieser Nachteil beseitigt ist.

Bei dem erfindungsgemäßen Verfahren kann eine Änderung des Lüftspiels in Abhängigkeit von der Fahrzeuggeschwindigkeit durchgeführt werden, wobei bei einer höheren Fahrgeschwindigkeit das Lüftspiel reduziert wird. Auch dies stellt eine Maßnahme zur Erhöhung der Sicherheit dar.

Was die Vorrichtung betrifft besteht die Erfindung darin, daß die erfindungsgemäße Vorrichtung als weiteren Sensor einen Geschwindigkeitssensor umfassen, dessen Daten bzw. Signale in der Bremssteuerung/Bremsregelung so weiterverarbeitet werden, daß die Bremsaktuatoren das Lüftspiel bei höherer Geschwindigkeit reduzieren. Die Vorrichtung arbeitet dabei vorteilhafterweise so, daß die Reduktion des Lüftspiels ab einer bestimmten Geschwindigkeit einsetzt.

Somit wird die Zeit, die bei einem Wechsel von einem betätigten Gaspedal auf ein Betätigen des Bremspedals benötigt wird, für die Überwindung des Lüftspiels genutzt, sodaß sichergestellt ist, daß die Bremswirkung sofort bei der Betätigung des Bremspedals eintreten kann. Da das Lüftspiel dann reduziert wird, wenn entweder der Gaspedaldruck vermindert wird oder der Fahrer den Fuß komplett vom Gaspedal löst, ist in jedem Fall eine Unabhängigkeit der Funktion von einer Betätigung des Bremspedals gegeben.

Dabei ist es günstig, darauf zu achten, daß ein größeres Lüftspiel dann eingestellt wird, wenn mit keiner Betätigung des Bremspedals zu rechnen ist. Gemäß einem weiteren Merkmal der Erfindung wird daher eine bereits erfolgte Reduktion des Lüftspiels dann rückgängig gemacht, wenn das Gaspedal ohne Einleiten eines Bremsvorganges wieder betätigt oder wenn der Druck auf das Gaspedal wieder erhöht wird.

Andererseits ist es auch von Vorteil, wenn nicht schon jede kleine Verminderung des Gaspedaldruckes ein Verringern des Lüftspiels einleitet. Bei einer Ausführungsform der Erfindung kann daher vorgesehen werden, daß die Reduktion des Lüftspiels in Abhängigkeit von einer bestimmten Verminderung des Gaspedaldruckes eingeleitet wird.

In diesem Zusammenhang ist es auch von Vorteil, wenn das Lüftspiel beim Überschreiten einer bestimmten Fahrzeuggeschwindigkeit und mit einem Ansteigen derselben bis zum kleinsten einstellbaren Wert zumindest im wesentlichen kontinuierlich reduziert wird.

Das erfindungsgemäße Verfahren wird ferner mittels einer Bremsregelung/Bremssteuerung, in der die von einem Gaspedalsensor und gegebenenfalls die von einem Geschwindigkeitssensor stammenden elektrischen Signale weiterverarbeitet werden, und welche elektromechanisch arbeitende Bremsaktuatoren steuert, durchgeführt.

Auch die erfindungsgemäße Vorrichtung kann so ausgeführt werden, daß die Bremssteuerung/Bremsregelung eine Reduktion des Lüftspiels in Abhängigkeit von einer bestimmten Verminderung des Gaspedaldruckes einleitet.

Die in die Bremsregelung/Bremssteuerung der Vorrichtung eingehenden Daten bzw. Signale über den Zustand der Betätigung des Gaspedals können vorteilhafterweise bereits von einer im Kraftfahrzeug vorhandenen Einrichtung stammen. Diese Einrichtung kann nun entweder der Leerlaufschalter oder, bei entsprechend ausgerüstetem Kraftfahrzeug, eine elektrische Gaspedalbetätigung sein.

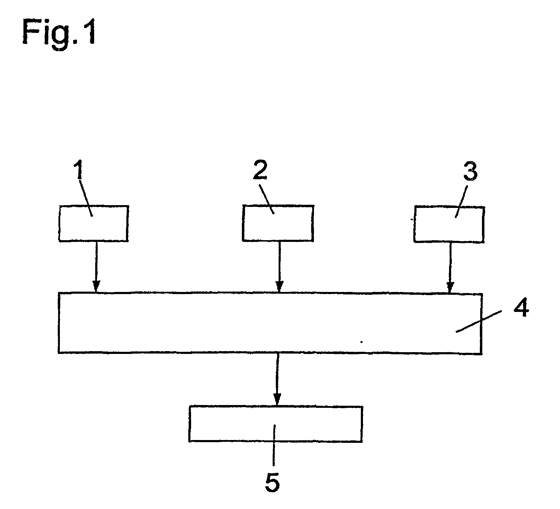

Weitere Merkmale, Vorteile und Einzelheiten der Erfindung werden nun anhand der einzigen Zeichnungsfigur (Fig.1), die ein Blockdiagramm der grundsätzlichen Funktionsweise der gegenständlichen Erfindung darstellt, näher beschrieben.

Das erfindungsgemäße Verfahren und die erfindungsgemäße Vorrichtung sind für ein Fahrzeug mit einem elektromechanischem Bremssystem vom Brake-By-Wire-Typ vorgesehen, welches für jedes Rad einen diesem zugeordneten Bremsaktuator besitzt. Wie bereits oben erwähnt, ist die grundsätzliche Funktionsweise derartiger Bremsanlagen so, daß eine Betätigung des Bremspedals von einem Sensor erfaßt und in entsprechender Weise in elektrische Signale umgewandelt wird. Diese werden an die Bremsaktuatoren weitergeleitet, welche jeweils, beispielsweise mittels einer durch einen Elektromotor angetriebenen Vorrichtung, die Bremsbeläge an die Bremsscheibe pressen.

Bei elektromechanischen Bremssystemen vom Brake-By-Wire-Typ können nun die Bremsbeläge, wie es zum Beispiel aus dem oben beschriebenen Stand der Technik gemäß der DE 44 33 377 A1 bekannt ist, bei nichtbetätigtem Bremspedal aktiv von der Bremsscheibe zurückgezogen werden, wodurch sich ein definierter Luftspalt zwischen den Bremsbelägen und den Reibflächen der Scheibenbremsen einstellt.

Gemäß der Erfindung wird nun bei nicht betätigtem Bremspedal grundsätzlich ein größeres Lüftspiel, bis zum maximal zur Verfügung stehende Lüftspiel, dann eingestellt, wenn das Bremssystem die Information erhält, daß das Gaspedal betätigt ist. Das vergrößerte Lüftspiel wird jedoch sofort reduziert, wenn der Fahrer den Fuß vom Gaspedal nimmt, unabhängig davon, ob dann auch das Bremspedal betätigt wird. Damit wird die Zeit, die für einen Wechsel vom betätigten Gaspedal auf ein betätigtes Bremspedal benötigt wird für die Überwindung des Lüftspiels genutzt, sodaß die Bremswirkung sofort bei der Betätigung des Bremspedals eintritt

Wie das in Fig. 1 dargestellte Blockdiagramm veranschaulicht, stellt ein Gaspedalsensor 1 fest, ob das Gaspedal betätigt wird und gegebenenfalls auch, ob der Druck auf das Gaspedal erhöht oder vermindert wird. Als Gaspedalsensor 1 kann bei mechanisch funktionierendem Gaspedal der Leerlaufschalter, der somit lediglich die Information liefert, ob das Gaspedal betätigt ist oder nicht, herangezogen werden. Neuere Fahrzeuge verfügen oft über eine elektrische Gaspedalbetätigung, die zusätzlich noch die Information liefern kann, ob der Druck auf das Gaspedal erhöht oder vermindert wird. Ein Bremspedalsensor 2 liefert die Information, ob und in welchem Ausmaß das Bremspedal betätigt wird. Die von den einzelnen Sensoren 1 und 2 kommenden Informationen liegen entweder bereits als elektrische Signale vor oder werden in geeigneter Weise in solche umgewandelt, werden in eine elektronische Bremsregelung/Bremssteuerung 4 eingespeist und so weiterverarbeitet, daß eine entsprechende Steuerung der Bremsaktuatoren 5 erfolgen kann. Wie bereits weiter oben erwähnt, stellt die Bremsregelung/Bremssteuerung 4 sicher, daß ein vergrößertes Lüftspiel dann eingestellt wird, wenn das Gaspedal betätigt ist. Das vergrößerte Lüftspiel wird über die vom Gaspedalsensor 1 stammenden elektrischen Signale durch eine entsprechende Steuerung der Bremsaktuatoren 5 reduziert, wenn der Fahrer den Fuß vom Gaspedal wegnimmt oder wenn eine Reduktion des Druckes auf das Gaspedal erfolgt. Im Falle, daß eine Bremsung durch Betätigen des Bremspedals eingeleitet wird, ist durch das bereits verringerte Lüftspiel sichergestellt, daß die Bremswirkung sofort bei Betätigen des Bremspedals eintreten kann. Wird das Gaspedal wieder betätigt, ohne daß eine Bremsung eintritt oder wird der Druck auf das Gaspedal wieder erhöht, so erfolgt über die Bremsregelung/Bremssteuerung 4 eine entsprechende Ansteuerung der Bremsaktuatoren, sodaß das Lüftspiel wieder vergrößert wird.

Dabei ist es grundsätzlich empfehlenswert, bei einem großen Lüftspiel auf eine entsprechende Sicherheit bezüglich der Freigängigkeit zu achten um in jedem Fall unbeabsichtigten Kontakt der Bremsbeläge mit den Bremsscheiben zu verhindern.

Die Bremsregelung/Bremssteuerung 4 kann so ausgelegt werden, daß eine Einflußnahme auf ein größeres Lüftspiel nur dann erfolgt, wenn beim Betätigen des Gaspedals bestimmte Wege überschritten werden. Dies stellt sicher, daß nicht schon kleine Korrekturen der Fahrgeschwindigkeit, wie sie im Normalbetrieb des öfteren vorkommen, zu einer Betätigung der Bremsaktuatoren 5 führen müssen.

Zusätzlich kann ein Geschwindigkeitssensor 3 Daten über die tatsächliche Fahrzeuggeschwindigkeit und deren Änderung liefern, die in der Bremsregelung/Bremssteuerung 4 so weiterverarbeitet werden, daß bei hohen Geschwindigkeiten grundsätzlich das Lüftspiel etwas verringert wird, um ein besonders schnelles Ansprechen der Bremsen zu gewährleisten, bei niedrigen Geschwindigkeiten könnte das Lüftspiel hingegen vergleichsweise groß bleiben, um auch hier unbeabsichtigte Restreibungen zwischen den Bremsbelägen und den Reibflächen der Scheibenbremsen zu verhindern.

Was die Bremsaktuatoren betrifft, so können ihre Funktionsweise und Ausgestaltung, beispielsweise der Einsatz elektromechanischer Stellmotoren zur Betätigung der Bremsbeläge zur Verringerung und Vergrößerung des Lüftspiels, in bekannter Weise erfolgen.

Wie es aus dem Stand der Technik gemäß der DE 44 33 377 A1 bekannt ist kann auch hier das Fahrzeug über Mittel zur Darstellung von Fahrzeugdaten (Fahrzeug-Busdaten) verfügen, wobei diese Daten beispielsweise Daten betreffend die Drehzahl oder ein Scheibenwischerbetriebssignal oder dergleichen sein können. Die Bremsaktuatoren können zusätzlich und in üblicher Weise auch mittels der üblichen Bremsprogramme ABS, ASR, FDR und dergleichen betätigt werden.

Bei der beschriebenen Ausführungsform wird die Größe des Lüftspiels über eine bloße Steuerung geändert und eingestellt. Dies ist durchaus eine sehr praktikable Lösung. Darüber hinaus könnte auch eine gesonderte Regelung über Abstandssensoren zum Erfassen des tatsächlichen Lüftspiels zwischen den Bremsbelägen und der Bremsscheibe jedes Fahrzeugrades vorgesehen werden, was jedoch mit einem höheren mechanischen und elektrischen Aufwand verbunden wäre.

## Patentansprüche

1. Verfahren zum Einstellen bzw. Ändern des Lüftspiels zwischen Bremsbelägen und Reibflächen von Fahrzeugbremsen mittels steuer- und regelbaren Abhebe- und Rückholvorgängen für die Bremsbeläge, bei dem eine Änderung des Lüftspiels in Abhängigkeit von einer Betätigung des Gaspedals durchgeführt wird, wobei bei einer Reduktion des Gaspedaldruckes und/oder einer Freigabe desselben das Lüftspiel reduziert wird, **dadurch gekennzeichnet, dass** eine Änderung des Lüftspiels auch in Abhängigkeit von der Fahrzeuggeschwindigkeit durchgeführt wird, wobei bei einer höheren Fahrgeschwindigkeit das Lüftspiel reduziert wird.

2. Verfahren nach Anspruch 1, **dadurch gekennzeichnet, dass** das Lüftspiel beim Überschreiten einer bestimmten Fahrzeuggeschwindigkeit und mit einem Ansteigen derselben bis zum kleinsten einstellbaren Wert zumindest im Wesentlichen kontinuierlich reduziert wird.

3. Verfahren nach einem der Ansprüche 1 bis 2, **dadurch gekennzeichnet, dass** es mittels einer Bremsregelung/Bremssteuerung (4), in der die von einem Gaspedalsensor (1) und die von einem Geschwindigkeitssensor (3) stammenden elektrischen Signale weiter verarbeitet werden und welche elektromechanisch arbeitende Bremsaktuatoren steuert, durchgeführt wird.

4. Verfahren nach einem der Ansprüche 1 bis 3, **dadurch gekennzeichnet, dass** eine nach einer Reduktion des Gaspedaldruckes und/oder einer Freigabe desselben bereits erfolgte Reduktion des Lüftspiels dann rückgängig gemacht wird, wenn das Gaspedal ohne Einleiten eines Bremsvorganges wieder betätigt oder wenn der Druck auf das Gaspedal wieder erhöht wird.

5. Verfahren nach einem der Ansprüche 1 bis 4, **dadurch gekennzeichnet, dass** die Reduktion des Lüftspiels infolge einer Reduktion des Gaspedaldruckes und/oder einer Freigabe desselben in Abhängigkeit von einer bestimmten Verminderung des Gespedaldruckes eingeleitet wird.

6. Vorrichtung zum Einstellen bzw. Ändern des Lüftspiels zwischen Bremsbelägen und Reibflächen von Fahrzeugbremsen mit einer Bremssteuerung/Bremsregelung zum Erfassen und Verarbeiten der von einem Bremspedalsensor sowie gegebenenfalls der von anderen Sensoren stammenden elektrischen Signale und zum Aktivieren von elektromechanisch arbeitenden Bremsaktuatoren, wobei die Bremssteuerung/Bremsregelung (4) Daten bzw. Signale über den Zustand der Betätigung des Gaspedals so weiter verarbeitet, dass die Bremsaktuatoren (5) das Lüftspiel bei einer Reduktion des Gaspedaldruckes und/oder einer Freigabe desselben verringern, **dadurch gekennzeichnet, dass** die Vorrichtung als weiteren Sensor einen Geschwindigkeitssensor (3) umfasst, dessen Daten bzw. Signale in der Bremssteuerung/Bremsregelung (4) so weiter verarbeitet werden, dass die Bremsaktuatoren das Lüftspiel bei höherer Geschwindigkeit reduzieren.

7. Vorrichtung nach Anspruch 6, **dadurch gekennzeichnet, dass** die Reduktion des Lüftspiels ab einer bestimmten Geschwindigkeit einsetzt.

8. Vorrichtung nach einer der Ansprüche 6 bis 7, **dadurch gekennzeichnet, dass** die Bremssteuerung/Bremsregelung (4) eine Reduktion des Lüftspiels infolge einer Reduktion des Gaspedaldruckes und/oder einer Freigabe des Gaspedals in Abhängigkeit von einer bestimmten Verminderung des Gaspedaldruckes einleitet.

9. Vorrichtung nach einem der Ansprüche 6 bis 8, **dadurch gekennzeichnet, dass** die Daten bzw. Signale über den Zustand der Betätigung des Gaspedals vom Leerlaufschalter des Kraftfahrzeuges stammen.

10. Vorrichtung nach einem der Ansprüche 6 bis 8, **dadurch gekennzeichnet, dass** die Daten bzw. Signale über den Zustand der Betätigung des Gaspedals von einer elektrischen Gaspedalbetätigung stammen.

## Claims

1. Method of adjusting or varying the clearance between brake pads and friction surfaces of vehicle brakes by means of controllable and adjustable lifting and restoring operations for the brake pads, wherein the clearance is varied in dependence on an application of the accelerator pedal, and the clearance is reduced when the accelerator pedal pressure is reduced and/or released,
**characterized in that** the clearance is varied also in dependence on the vehicle speed, and the clearance is reduced at a higher driving speed.

2. Method as claimed in claim 1,
**characterized in that** the clearance is at least substantially continuously reduced until its minimum adjustable value when a defined vehicle speed is exceeded and with a rise of said speed.

3. Method as claimed in any one of claims 1 to 2,
**characterized in that** said method is implemented by means of a brake control/brake regulation (4) in which the electric signals originating from an accelerator pedal sensor (1) and from a speed sensor (3) are further processed and which controls electromechanically operating brake actuators.

4. Method as claimed in any one of claims 1 to 3,
**characterized in that** a reduction of the clearance that has already been executed after.a reduction of the accelerator pedal pressure and/or a release of said is cancelled when the accelerator pedal is actuated again without a braking operation being initiated or when the pressure applied to the accelerator pedal is increased again.

5. Method as claimed in any one of claims 1 to 4,
**characterized in that** the reduction of the clearance due to a reduction of the accelerator pedal pressure and/or a release of said is initiated in dependence on a defined reduction of the accelerator pedal pressure.

6. Device for adjusting or varying the clearance between brake pads and friction surfaces of vehicle brakes with a brake control/brake regulation for detecting and processing the electric signals originating from a brake pedal sensor and, as the case may be, other sensors and for activating electromechanically operating brake actuators, wherein the brake control/brake regulation (4) further processes data or signals about the condition of the application of the accelerator pedal in such a fashion that the brake actuators (5) reduce the clearance when the accelerator pedal pressure is reduced and/or released,
**characterized in that** the device comprises a speed sensor (3) as another sensor whose data or signals are further processed in the brake control/brake regulation (4) so that the brake actuators reduce the clearance at higher speed.

7. Device as claimed in claim 6,
**characterized in that** the reduction of the clearance commences with a defined speed.

8. Device as claimed in any one of claims 6 to 7,
**characterized in that** the brake control/brake regulation (4) initiates a reduction of the clearance due to a reduction of the accelerator pedal pressure and/or a release of the accelerator pedal in dependence on a defined reduction of the accelerator pedal pressure.

9. Device as claimed in any one of claims 6 to 8,
**characterized in that** the data or signals about the condition of the application of the accelerator pedal come from the no-load switch of the motor vehicle.

10. Device as claimed in any one of claims 6 to 8,
**characterized in that** the data or signals about the condition of the actuation of the accelerator pedal come from an electric accelerator pedal actuation.

## Revendications

1. Procédé pour ajuster ou modifier le jeu entre des garnitures de frein et des surfaces de frottement des freins de véhicules au moyen de processus de décollage et de retour contrôlables et,réglables pour les garnitures de frein, pour lequel une modification du jeu est réalisée en fonction d'un actionnement de la pédale d'accélérateur, le jeu étant réduit en cas de réduction de la pression de la pédale d'accélérateur et/ou en cas de déblocage de ladite pédale, **caractérisé en ce qu'**une modification du jeu est également réalisée en fonction de la vitesse du véhicule, le jeu étant réduit en cas de vitesse élevée.

2. Procédé selon la revendication 1, **caractérisé en ce que** le jeu est réduit au moins de manière continue pour l'essentiel en cas de dépassement d'une vitesse donnée du véhicule et avec une augmentation de cette dernière jusqu'à la plus petite valeur ajustable.

3. Procédé selon l'une quelconque des revendications 1 à 2, **caractérisé en ce qu'**il est réalisé au moyen d'une régulation de freinage/commande de freinage (4) dans laquelle les signaux électriques provenant d'un capteur de la pédale d'accélérateur (1) et les signaux électriques provenant d'un capteur de vitesse (3) sont traités, ladite régulation de freinage/commande de freinage commandant des actionneurs de frein à fonctionnement électromécanique.

4. Procédé selon l'une quelconque des revendications 1 à 3, **caractérisé en ce qu'**une réduction du jeu déjà réalisée après une réduction de la pression de la pédale d'accélérateur et/ou après un déblocage de ladite pédale est ensuite annulée si la pédale d'accélérateur est de nouveau actionnée sans engagement d'un processus de freinage ou si la pression sur la pédale d'accélérateur est de nouveau augmentée.

5. Procédé selon l'une quelconque des revendications 1 à 4, **caractérisé en ce que** la réduction du jeu à la suite d'une réduction de la pression de la pédale d'accélérateur et/ou d'un déblocage de ladite pédale est engagé en fonction d'une diminution définie de la pression de la pédale d'accélérateur.

6. Dispositif pour ajuster ou modifier le jeu entre des garnitures de frein et des surfaces de frottement des freins de véhicules avec une commande de freinage/régulation de freinage pour acquérir et traiter les signaux électriques provenant d'un capteur de pédale de frein ainsi que, le cas échéant, provenant d'autres capteurs et pour activer des actionneurs de frein à fonctionnement électromécanique, la régulation de freinage/commande de freinage (4) traitant des données ou signaux concernant l'état de l'actionnement de la pédale d'accélérateur de telle manière que les actionneurs de frein (5) diminuent le jeu en cas de réduction de la pression de la pédale d'accélérateur et/ou en cas de déblocage de ladite pédale, **caractérisé en ce que** le dispositif comprend un capteur de vitesse (3) en tant qu'autre capteur dont les données ou les signaux sont traités dans la régulation de freinage/commande de freinage (4) de manière à ce que les actionneurs de frein réduisent le jeu en cas de vitesse élevée.

7. Dispositif selon la revendication 6, **caractérisé en ce que** la réduction du jeu commence à partir d'une vitesse donnée.

8. Dispositif selon l'une quelconque des revendications 6 à 7, **caractérisé en ce que** la régulation de freinage/commande de freinage (4) engage une réduction du jeu à la suite d'une réduction de la pression de la pédale d'accélérateur et/ou d'un déblocage de la pédale d'accélérateur en fonction d'une diminution définie de la pression de la pédale d'accélérateur.

9. Dispositif selon l'une quelconque des revendications 6 à 8, **caractérisé en ce que** les données et/ou signaux concernant l'état de l'actionnement de la pédale d'accélérateur proviennent du commutateur gaz réduits du véhicule automobile.

10. Dispositif selon l'une quelconque des revendications 6 à 8, **caractérisé en ce que** les données et/ou signaux concernant l'état de l'actionnement de la pédale d'accélérateur proviennent d'un actionnement électrique de la pédale d'accélérateur.
